(19) **Europäisches Patentamt**
**European Patent Office**
**Office européen des brevets**

(11) **EP 4 788 033 A1**

(12) **EUROPEAN PATENT APPLICATION**

(43) Date of publication:
**05.08.2026 Bulletin 2026/32**

(21) Application number: **26152227.0**

(22) Date of filing: **16.01.2026**

(51) International Patent Classification (IPC):
**H04W 72/541** (2023.01) **H04W 24/02** (2009.01)
**H04W 72/542** (2023.01) **H04W 84/12** (2009.01)

(52) Cooperative Patent Classification (CPC):
**H04W 72/542; H04W 24/02; H04W 24/08;**
**H04W 72/541; H04W 84/12**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **31.01.2025 US 202563752398 P**
**26.11.2025 US 202519402199**

(71) Applicant: **Juniper Networks, Inc.**
**Sunnyvale, CA 94089-1206 (US)**

(72) Inventors:
• **SANKHAVARAM, Shiv**
**Sunnyvale, 94089 (US)**
• **WANG, Wenfeng**
**Sunnyvale, 94089 (US)**
• **THOMAS, Jacob**
**Sunnyvale, 94089 (US)**
• **LIN, May Zar**
**Sunnyvale, 94089 (US)**

(74) Representative: **D Young & Co LLP**
**3 Noble Street**
**London EC2V 7BQ (GB)**

(54) **UNIFIED CHANNEL SCORING**

(57)    Techniques are disclosed for a network management system (NMS) that computes a channel score based on a normalized metric for a channel and assigns a channel to an access point (AP) based on the channel score). In one example, the NMS obtains data associated with at least one channel of a plurality of channels in a frequency band at a site, where the data includes a set of metrics. The NMS computes a normalized metric for each metrics of the set of metrics with respect to a threshold value representative of degraded performance of the at least one channel. The NMS computes a channel score based on a product of the normalized metrics. The NMS assigns a channel to at least one AP based on the channel score for the channel.

FIG. 1A

**(Cont. next page)**

**NETWORK MANAGEMENT SYSTEM**

VNA / AI MODULE
132

RADIO RESOURCE
MANAGEMENT
134

NETWORK DATA
136

CHANNEL-SPECIFIC
OPERATING
PARAMETER(S)
138

130

100

148

USER DEVICES

106 WIRELESS
175 WIRED
177 SD-WAN
179 DATA CENTER
181
MULTICLOUD APPS

187A
189
187B

Connected Security

FIG. 1B

**Description**

This application claims the benefit of US Patent Application No. 19/402,199, filed 26 November 2025, which claims the benefit of US Provisional Patent Application No. 63/752,398, filed 31 January 2025.

**TECHNICAL FIELD**

The disclosure relates generally to computer networks and, more specifically, to radio resource management in a wireless network.

**BACKGROUND**

Commercial premises or sites, such as offices, hospitals, airports, stadiums, or retail outlets, often install complex wireless network systems, including a network of wireless access points (APs), throughout the premises to provide wireless network services to one or more wireless client devices (or simply, "clients"). APs are physical, electronic devices that enable other devices to wirelessly connect to a wired network using various wireless networking protocols and technologies, such as wireless local area networking protocols conforming to one or more of the IEEE 802.11 standards (i.e., "WiFi"), Bluetooth / Bluetooth Low Energy (BLE), mesh networking protocols such as ZigBee, or other wireless networking technologies.

To provide wireless networks, APs are configured for wireless communication in one or more wireless frequency bands, e.g., a 2.4 GHz frequency band, a 5 GHz frequency band, and/or a 6 GHz frequency band. Each frequency band is comprised of a plurality of channels. At any given time, an AP may be assigned to operate (e.g., transmit and receive wireless signals) on a specific one of the plurality of channels within each of the one or more wireless frequency bands.

**SUMMARY**

Particular aspects are set out in the appended independent claims. Various optional embodiments are set out in the dependent claims.

In general, this disclosure describes techniques for a network management system (NMS) of a wireless network to assign wireless channel(s) to wireless radios of access points (APs) based on channel scores indicative of quality of each channel within a frequency band. Traditional channel assignment systems may only take into account limited types of interference, such as non-WIFI (e.g., radar) interference and/or interference from neighboring APs, detected on operating channels of data radios of APs. The use of limited data from limited sources may result in assignment of an operating channel to an AP where the assigned channel may be free from the limited types of interference but may still suffer from low quality performance.

Instead of reassigning channels based solely on interference detected on the operating channels of the APs, the disclosed techniques enable the NMS to assign channels based on a view of the radio frequency (RF) environment that incorporates WIFI and non-WIFI interference, noise, and other performance metrics observed on all channels within a wireless frequency band by at least one continuous scan radio. The network management system obtains metrics regarding the quality of channels within the wireless frequency band and computes normalized metrics. The NMS uses the normalized metrics to compute channel scores for the channels within the wireless frequency band and assigns channels to data radios of APs based on the channel scores.

The techniques of this disclosure may provide one or more technical advantages that enable at least one practical application. For example, the techniques enable an NMS to optimize channel assignment to APs based on an assessment of multiple sources of performance degradation. The NMS may use data based on scan radio readings, data radio readings, and/or from third parties to obtain comparatively greater visibility into an RF environment than by using data radio readings alone. The NMS may use this data to improve the performance of the wireless network (e.g., performance of wireless connectivity to client devices provided by APs) by assigning channels that are relatively free from multiple types of interference. In another example, the techniques may enable the NMS to avoid selecting a channel that suffers from a particular type of performance degradation but that does not suffer from other types of performance degradation. In yet another example, the techniques may enable the NMS to perform root cause analysis to determine a cause of the performance degradation detected in one or more channels and generate notifications and/or recommendations to resolve the performance degradation.

The details of one or more examples of the techniques of this disclosure are set forth in the accompanying drawings and the description below. Other features, objects, and advantages of the techniques will be apparent from the description and drawings, and from the claims.

## BRIEF DESCRIPTION OF DRAWINGS

FIG. 1A is a diagram of an example network system in which channels are assigned to access points based on channel scores, in accordance with one or more techniques of the disclosure.

FIG. 1B is a block diagram illustrating further example details of the network system of FIG. 1A.

FIG. 2 is a block diagram of an example access point in accordance with one or more techniques of the disclosure.

FIG. 3 is a block diagram of an example network management system in accordance with one or more techniques of the disclosure.

FIG. 4 is a block diagram of an example user equipment device in accordance with one or more techniques of the disclosure.

FIG. 5 is a block diagram of an example network node, such as a router or switch, in accordance with one or more techniques of the disclosure.

FIGS. 6A-6B are graphs of example metrics of a wireless channel, in accordance with one or more techniques of this disclosure.

FIG. 7 is a set of graphs of example metrics of wireless channels within a wireless frequency band, in accordance with one or more techniques of this disclosure.

FIG. 8 is a set of graphs of example metrics that include forecasted metrics of wireless channels within a wireless frequency band, in accordance with one or more techniques of this disclosure.

FIG. 9 is a flowchart of an example operation of determining channel assignments, in accordance with one or more techniques of the disclosure.

## DETAILED DESCRIPTION

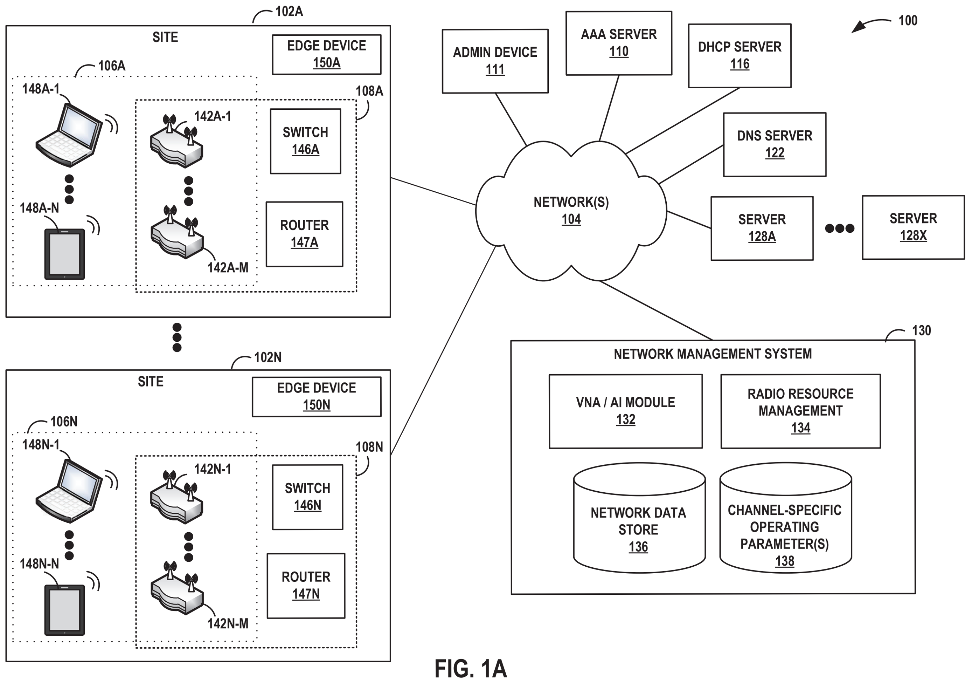

FIG. 1A is a diagram of an example network system 100 in which channels are assigned to access points (APs) based on channel scores, in accordance with one or more techniques of the disclosure. Example network system 100 includes a plurality of network sites 102A-102N (alternatively referred to as "sites 102A-102N") at which a network service provider manages one or more wireless networks 106A-106N, respectively. Although in FIG. 1A each site 102A-102N is shown as including a single respective wireless network 106A-106N, respectively, in some examples, each site 102A-102N may include multiple wireless networks, and the disclosure is not limited in this respect.

Each site 102A-102N includes a plurality of network access server (NAS) devices 108A-108N, such as access points (APs) 142, switches 146, or routers 147. NAS devices 108 may include any network infrastructure devices capable of authenticating and authorizing client devices to access an enterprise network. For example, site 102A includes a plurality of APs 142A-1 through 142A-M. Similarly, site 102N includes a plurality of APs 142N-1 through 142N-M. Each AP 142 may be any type of wireless access point, including, but not limited to, a commercial or enterprise AP, a router, or any other device that is connected to a wired network and is capable of providing wireless network access to client devices within the site.

To provide wireless networks 106, APs 142 are configured for wireless communication in one or more wireless frequency bands. For example, the wireless frequency bands may include, but are not limited to, a 2.4 GHz frequency band, a 5 GHz frequency band, a 6 GHz frequency band, and/or any other lower or higher frequency bands. Each frequency band is comprised of a plurality of channels. At any given time, each of APs 142 is assigned to operate (e.g., transmit and receive wireless signals) on a specific one of the plurality of channels. The channel assignments may be carried out by, for example, radio resource manager (RRM) 134 of NMS 130 or another RRM or similar module of one or more of NAS devices 108 or another computing device configured to manage radio resources in a wireless network.

Each site 102A-102N also includes a plurality of client devices, otherwise known as user equipment devices (UEs), referred to generally as client devices 148 or UEs 148, representing various wireless-enabled devices within each site. For example, a plurality of UEs 148A-1 through 148A-N are currently located at site 102A. Similarly, a plurality of UEs 148N-1 through 148N-N are currently located at site 102N. Each UE 148 may be any type of wireless client device, including, but not limited to, a mobile device such as a smartphone, tablet or laptop computer, a personal digital assistant (PDA), a wireless terminal, a smart watch, smart ring or other wearable device. UEs 148 may also include IoT client devices such as printers, security devices, environmental sensors, appliances, or any other device configured to communicate over one or more wireless networks 106.

In order to provide wireless network services to UEs 148 and/or communicate over the wireless networks 106, APs 142 and the other wired client-side devices at sites 102 are connected, either directly or indirectly, to one or more network devices (e.g., switches, routers, gateways, or the like) via physical cables, e.g., Ethernet cables. In the example of FIG. 1A, site 102A includes a switch 146A to which one or more of APs 142A-1 through 142A-M at site 102A may be connected, and switch 146A may, in turn, be connected to a router 147A. Similarly, site 102N includes a switch 146N to which one or more of APs 142N-1 through 142N-M at site 102N may be connected, and switch 146N may, in turn, be connected to a router 147N. Although illustrated in FIG. 1A as if each site 102 includes a single switch 146 and a single router 147, in other examples, each site 102 may include more or fewer switches and/or routers. In addition, the APs and the other wired client-side devices of the given site may be connected to two or more switches and/or routers. In some examples, interconnected switches and routers comprise wired local area networks (LANs) at sites 102 hosting wireless networks 106. In addition, two or more switches at a site may be connected to each other and/or connected to two or more routers, and two or more routers may be connected to each other and/or connected to other routers at other sites, e.g., via a mesh or partial mesh topology in a hub-and-spoke architecture, forming at least part of a wide area network (WAN).

Example network system 100 also includes various networking components for providing networking services within the wired network including, as examples, an Authentication, Authorization and Accounting (AAA) server 110 for authenticating users and/or UEs 148, a Dynamic Host Configuration Protocol (DHCP) server 116 for dynamically assigning network addresses (e.g., IP addresses) to UEs 148 upon authentication, a Domain Name System (DNS) server 122 for resolving domain names into network addresses, a plurality of servers 128A-128X (collectively "servers 128") (e.g., web servers, databases servers, file servers and the like), and NMS 130. As shown in FIG. 1A, the various devices and systems of network system 100 are coupled together via one or more network(s) 104, e.g., the Internet and/or an enterprise intranet.

In the example of FIG. 1A, NMS 130 is a cloud-based computing platform that manages wireless networks 106A-106N at one or more of sites 102A-102N. As further described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. In some examples, NMS 130 outputs notifications, such as alerts, alarms, graphical indicators on dashboards, log messages, text / SMS messages, email messages, and the like, and/or recommendations regarding wireless network issues to a site or network administrator ("admin") interacting with and/or operating admin device 111. Additionally, in some examples, NMS 130 operates in response to configuration input received from the administrator interacting with and/or operating admin device 111.

NMS 130 monitors network data associated with wireless networks 106A-106N at each site 102A-102N, respectively, to deliver a high-quality wireless network experience to end users, IoT devices and clients at the site. The network data may include a plurality of states or parameters indicative of one or more aspects of wireless network performance. The data may be obtained, collected, and/or received from numerous sources, including client devices, AP devices, switches, routers, gateways, firewalls, etc. The network data may be stored in a database, such as network data store 136 within NMS 130 or, alternatively, in an external database. In general, NMS 130 may provide a cloud-based platform for network data acquisition, monitoring, activity logging, reporting, predictive analytics, network anomaly identification, and alert generation. In some examples, NMS 130 uses a combination of artificial intelligence, machine learning, and data science techniques to optimize user experiences and simplify operations across any one or more of wireless access, wired access, and software defined wide area network (SD-WAN) domains.

The administrator and admin device 111 may comprise IT personnel and an administrator computing device associated with one or more of sites 102. Admin device 111 may be implemented as any suitable device for presenting output and/or accepting user input. For instance, admin device 111 may include a display. Admin device 111 may be a computing system, such as a mobile or non-mobile computing device operated by a user and/or by the administrator. Admin device 111 may, for example, represent a workstation, a laptop or notebook computer, a desktop computer, a tablet computer, or any other computing device that may be operated by a user and/or present a user interface in accordance with one or more aspects of the present disclosure. Admin device 111 may be physically separate from and/or in a different location than NMS 130 such that admin device 111 may communicate with NMS 130 via network 104 or other means of communication.

In some examples, one or more of NAS devices 108, e.g., APs 142, switches 146, and routers 147, may connect to edge devices 150A-150N via physical cables, e.g., Ethernet cables. Edge devices 150 comprise cloud-managed, wireless local area network (LAN) controllers. Each of edge devices 150 may comprise an on-premises device at a site 102 that is in communication with NMS 130 to extend certain microservices from NMS 130 to the on-premises NAS devices 108 while using NMS 130 and its distributed software architecture for scalable and resilient operations, management, troubleshooting, and analytics.

Each one of the network devices of network system 100, e.g., APs 142, switches 146, routers 147, UEs 148, edge devices 150, and any other servers or devices attached to or forming part of network system 100, may include a system log or an error log module wherein each one of these network devices records the status of the network device including normal operational status and error conditions. Throughout this disclosure, one or more of the network devices of network system 100, e.g., APs 142, switches 146, routers 147, and UEs 148, may be considered "third-party" network devices when owned by and/or associated with a different entity than NMS 130 such that NMS 130 does not directly receive, collect, or otherwise have access to the recorded status and other data of the third-party network devices. In some examples, edge devices 150 may provide a proxy through which the recorded status and other data of the third-party network devices may be reported to NMS 130.

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network system 100, and may or may not form a part of NMS 130.

NMS 130 may include a virtual network assistant (VNA) 132 that analyzes network data received from one or more NAS devices 108, and in some cases UEs 148, in a wireless network, provides real-time insights and simplified troubleshooting for IT operations, and automatically takes remedial action or provides recommendations to proactively address wireless network issues. VNA 132 may, for example, include a network data processing platform configured to process hundreds or thousands of concurrent streams of network data from UEs 148, sensors and/or agents associated with AP 142 and/or nodes within network 104. Example SLE metrics may include time to connect, throughput, successful connects, capacity, AP health, and/or any other metric that may be indicative of one or more aspects of wireless network performance. The network service provider may further implement systems that automatically identify the root cause(s) of any SLE metrics that do not satisfy the thresholds, and/or that automatically implement one or more remedial actions to address the root cause, thus automatically improving wireless network performance. In some examples, VNA 132 may obtain SLE data from one or more of client devices 148.

APs 142 managed by NMS 130 may experience interference on one or more wireless channels used by APs 142. APs 142 may experience one or more types of interference, such as interference due to transmission by neighboring APs using data radios of APs 142. For example, AP 142A-1 may experience interference in a wireless channel assigned to AP 142A-1. AP 142A-1 may experience the interference as a result of AP 142A-M transmitting to client devices (e.g., UEs 148) using the same channel as AP 142A-1. APs 142 may include information regarding experienced interference in network data provided to NMS 130.

NMS 130 may reassign wireless channels for APs 142 as part of managing wireless channel assignments of APs 142. NMS 130 may determine a wireless channel based in part on information regarding channel interference from APs 142. In an example, AP 142A-1 experiences interference on its assigned operational channel within the 5 GHz frequency band. NMS 130 receives network information from AP 142A-1 that the AP is experiencing interference on its assigned channel. NMS 130 determines that the interference experienced by AP 142A-1 is consistent with interference from radar and blacklists the operational channel from use at the site. NMS 130 then determines a different channel assignment for AP 142A-1 to avoid the blacklisted channel and instructs AP 142A-1 to switch to the updated channel assignment.

In some examples, NMS 130 may determine channel assignments for APs 142 on a periodic basis. NMS 130 may determine channel assignments for a portion of or the entirety of APs 142 based on one or more factors, such as interference associated with channels, whether the channels are blacklisted, and/or other factors. For example, NMS 130 may determine channel assignments for APs 142 on a daily basis based on analysis by a module of NMS 130, such as radio resource manager 134.

Radio resource manager (RRM) 134 of NMS 130 may monitor one or more metrics for each site 102A-102N in order to learn and optimize the RF environment at each site. For example, RRM 134 may monitor coverage and capacity SLE metrics for a wireless network 106 at a site 102 based on interference observed by data radios of APs 142 in order to identify potential issues with SLE coverage and/or capacity in the wireless network 106. RRM 134 may use the interference observed by scan radios of APs 142 to make adjustments to the radio settings of the access points at each site to address the identified issues. For example, RRM 134 may determine channel and transmit power distribution across all APs 142 in each wireless network 106A-106N. RRM 134 may monitor events, power, channel, bandwidth, and number of clients connected to each AP. RRM 134 may further automatically change or update configurations of one or more APs 142 at a site 102 with an aim to improve the coverage and capacity SLE metrics and thus to provide an improved wireless experience for the user.

Conventional techniques for channel assignment may lack visibility into a full picture of the RF environment, including noise, interference, and performance issues across all channels within a wireless frequency band. Such conventional techniques may only use interference data from operating channels of data radios of APs. The conventional techniques may assign channels to APs without taking into account other types of interference and/or performance issues across all channels of the wireless frequency band. Furthermore, the conventional techniques may assign channels that, while performing well with respect to a particular type of interferences, may suffer from other types of interference or performance issues that degrade the quality of the channel.

In accordance with the techniques described in this disclosure, NMS 130 obtains data that includes a set of metrics associated with at least one channel of a frequency band. RRM 134 computes channel scores based on normalized metrics representative of channel quality and assigns channels to APs 142 based on the channel scores. RRM 134 may compute the normalized metrics based on the obtained metrics for use in computing the channel scores.

NMS 130 may obtain data associated with channels of a frequency band from various sources within network system 100. NMS 130 may obtain data from sources that include scan radios of APs 142, data radios of APs 142, sensors, non-WIFI systems, third-party application servers, and/or other sources. For instance, NMS 130 may obtain continuous scan radio readings from scan radios of APs 142 rather than solely obtaining data radio readings from the data radios of APs 142. NMS 130 may obtain data associated with multiple channels within a frequency band for one or more WIFI frequency bands. In an example, AP 142A-1 uses a scan radio and a data radio to generate data regarding the performance of multiple channels within each frequency band, where the data includes metrics regarding the performance of the channels. NMS 130 obtains the data generated by AP 142A-1 and stores the data in network data store 136.

NMS 130 may obtain data that includes sets of metrics that are associated with wireless channels of a frequency band at a site, where the set of metrics relate to various performance metrics of the channels. NMS 130 may obtain sets of metrics that include non-WIFI metrics, noise floor metrics, undecodable WIFI metrics, unknown WIFI metrics, and/or other types of metrics. NMS 130 may obtain data that includes sets of metrics for multiple channels within each frequency band of multiple frequency bands in which APs at the site are operational (e.g., obtain sets of metrics for one or more channels in the 2.4 GHz frequency band, sets of metrics for one or more channels in the 5 GHz frequency band, sets of metrics for one or more channels in the 6 GHz frequency band, etc.).

In some examples, NMS 130 obtains data from sources other than the scan radios and data radios of APs 142. NMS 130 may obtain data from a variety of sources that include access points or network access devices that are not managed by NMS 130, radar systems, application servers, Automated Frequency Coordination (AFC) systems, electronic shelf label (ESL) systems, Fast Fourier Transform (FFT) dynamic scan or radio frequency (RF) spectrum capture, and/or other sources. NMS 130 may obtain data that includes RF spectrum data, third-party data from the application servers, and/or client connectivity data derived from the SLE metrics. For example, NMS 130 may obtain data from two or more of the aforementioned sources for use in determining channel assignments.

NMS 130 may use RRM 134 to compute normalized metrics for one or more metrics in a set of metrics. For instance, RRM 134 may compute normalized metrics for metrics associated with interference observed by scan radios of APs 142. RRM 134 may compute a normalized metric for each metric, where the normalized metric represents a quality of a channel with respect to the corresponding metric. RRM 134 may use one or more equations to compute the normalized metric, such as Equation 1 below:

$$\frac{1}{1 + e^{k(x-threshold)}} \quad (eq.1)$$

where $x$ is the raw value of the metric, $k$ is a predetermined steepness scalar, and "*threshold*" is a value corresponding to an associated threshold of degraded performance (e.g., a threshold determined by RRM 134, an administrator, and/or other entity). RRM 134 may determine the threshold in one or more ways, such as by using historical data to determine percentiles of the metrics. In some examples, RRM 134 may filter the percentiles of data to only include data from sites with a minimum number of APs (e.g., to ignore smaller or test sites).

In some examples, RRM 134 may verify whether normalized values reflect a distribution. RRM 134 may group by scan channel and average each normalized metric score to see the resulting channel score for each metric. RRM 134 may compare the metric's channel score to the distribution of the metric's raw values to verify that the score effectively represents the site's behavior. In an example, RRM 134 determines scan noise floor scores for a site, where channels 40-120 have favorable distributions with a majority of scan noise floor values being between -100 and -90, channels 130-140 have slightly less favorable distributions with most of their values being between -90 and -80 and channels 140-160 have anomalous distributions with majority of scan noise floor values being between -80 to -60 (e.g., relatively high channel scores).

RRM 134 may use the one or more equations to compute a normalized metric that is normalized to a value between 0 and 1, with values close to 0 representative of metrics being optimal for performance and/or "normal" value and values close to 1 representative of metrics being un-optimal for performance or of an "anomalous value". For instance, RRM 134 may compute the normalized metrics with respect to a threshold value representative of degraded performance of a channel, where the normalized metrics represents a quality of the channel with respect to the corresponding channel. RRM 134 may use the sigmoid function to demonstrate a sharp increase in score as the raw value approaches the threshold value and also to maintain a low score for the normal range of values. For example, RRM 134 may compute a normalized value close to 1 for a noise floor of a wireless channel that is representative of the wireless channel having a relatively high noise floor that is not optimal for wireless transmission.

RRM 134 computes a channel score based on the normalized metrics. RRM 134 may analyze the data regarding interference and/or application performance and use the data to compute a score for each channel (e.g., 0 = channel is ideal for the access point to transmit on, 1 = channel is poor for the access point to transmit on). RRM 134 may compute channel scores for each channel based on the normalized metrics associated with the channel and using a product formula. RRM 134 may use one or more types of equations to compute the product formula, such as Equation 2 below:

$$score = 1 - \prod_{i \in metric\ scores} 1 - i \quad (eq.\,2)$$

where the *"score"* is the channel score. RRM 134 may compute the *"metrics scores"* using one or more equations, such as Equation 3 below:

$$metric\ scores = \{nonwifi\ score, noise\ floor\ score, undecodable\ wifi\ score\} \quad (eq.\,3)$$

where each of the scores aggregated into the "*metric scores*" are the normalized metrics baed on metrics obtained from network data store 136. For example, RRM 134 may compute the *"metric scores"* using for a channel using "*nonwifi score*" as a normalized numerical value of interference from sources other than WIFI transmitters (e.g., weather radars), "*noise floor score*" as a normalized numerical value in dBm of a noise floor of interference for a channel, "*undecodable wifi score*" as a normalized numerical score indicative of WIFI interference from hidden WIFI networks. In some examples, RRM 134 may compute additional or alternative normalized metrics for inclusion in computing the "*metric scores*", such as client application performance metrics. RRM 134 may use the above equations to compute normalized metrics representative of the quality of a channel based on scan radio and/or data radio readings from APs 142.

RRM 134 may use a product formula rather than a standard linear weighted formula such that if any one of the scores is poor (e.g., close to 1), it is appropriately expressed in the overall channel score. For example, RRM 134 may use the product formula in order to identify, from the data, when one metric is fairly poor to the point where the channel is unusable but the other metrics are normal. Furthermore, RRM 134 may use the product formula to enable inclusion of additional metrics to the channel score, in which a linear scoring formula would become even less practical as the evenly distributed weight for each metric continues to decrease.

RRM 134 may periodically generate updated channel scores. RRM 134 may update the channel scores on a periodic basis (e.g., hourly, daily, etc.) with the latest hour of scores used for any local/instant updates in channelization. For example, RRM 134 may use the latest 24 hours of scores to facilitate global optimization.

In some examples, RRM 134 may generate forecasted channel scores indicative of predicted channel performance at one or more points in time in the future. RRM 134 may process historical data of one or more metrics using one or more ML models to determine one or more forecasted channel scores. In an example, RRM 134 obtains historical data that includes metrics associated with performance metrics of wireless channels over a predetermined period of time. RRM 134 applies an ML model to the historical data to determine a forecasted channel score indicative of a predicted channel score at a future point in time. RRM 134 may use forecasted channel scores to determine channel assignments at times other than those of peak demand (e.g., client wireless connectivity demand). RRM 134 may determine forecasted channel scores for use in proactively determining channel assignments for periods of peak demand as part of a channel reassignment process executed during periods of off-peak demand. In an example, NMS 130 determines channel assignments for the following day during an overnight period of reduced wireless connectivity demand. RRM 134 generates forecasted channel scores to inform the proactive determination of channel assignments for upcoming periods of peak wireless connectivity demand during the following day.

RRM 134 may assign channels to APs 142 based on the channel score. RRM 134 may determine channel assignments based on one or more factors, such as whether a channel score for a channel exceeds a predetermined threshold, whether a channel score for a channel has increased compared to previously computed channel scores for the channel, detection of an event associated with a channel, and/or other factors. For instance, RRM 134 may assign or re-assign channels based on SLE data computed by NMS 130 and based on network data from APs 142. RRM 134 may re-assign channels and/or conduct an initial channel assignment based on the channel scores. For instance, RRM 134 may refrain from assigning a given channel to one of APs 142 based on a channel score associated with the given channel exceeding a predetermined threshold.

In some examples, RRM 134 assigns channels to APs 142 based on time windows. RRM 134 may determine channel scores for a channel over a time window and assign channels for a second and subsequent time window based on the channel score for the prior time window. In an example, RRM 134 determines channel scores for a previous time window (e.g., previous with respect to a current time window). RRM 134 assigns a channel to an AP based on the channel scores for the previous time window.

The techniques of this disclosure may provide one or more technical advantages that enable at least one practical application. For instance, the use of data associated with interference experienced by scan radios of APs 142, which scan and collect data for each channel within a frequency band, may grant comparatively greater visibility into the RF environment of a site than solely using data radios, which only scan and collect data for the current operating channels of the radios. Further, the greater visibility into the RF environment may enable NMS 130 to avoid assigning wireless channels with relatively poor quality (e.g., relatively high levels of interference). The NMS may use this data to improve the performance of the wireless network (e.g., performance of wireless connectivity to client devices provided by APs) by assigning channels that are relatively free from multiple types of interference. In another example, the computation of channel scores based on normalized metrics may enable NMS 130 to avoid assigning channels with a particular type of degraded performance to APs 142 (e.g., assign a channel that is impacted by one type of performance degradation and is otherwise unimpacted). Furthermore, the normalization of metrics may enable NMS 130 to consider metrics with different units and scales (e.g., scales of "acceptable" levels of interference or performance degradation). In yet another example, the use of forecasted channel scores may enable NMS 130 to determine channel assignments during periods of off-peak demand and thereby proactively reassign channels to maximize the performance of the wireless network ahead of periods of peak wireless connectivity demand and/or utilization.

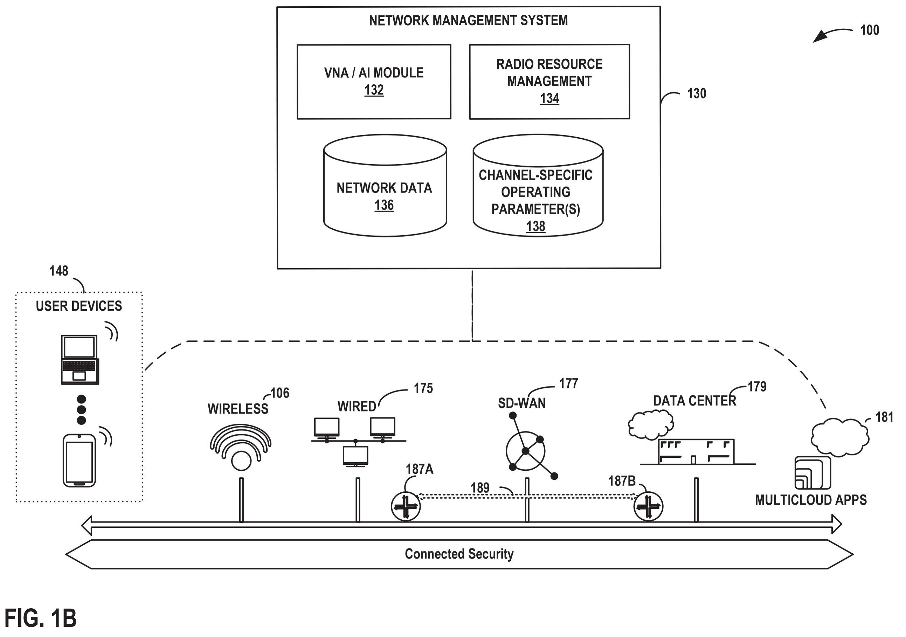

FIG. 1B is a block diagram illustrating further example details of the network system of FIG. 1A. As described above with respect to FIG. 1A, NMS 130 executing radio resource management module 134, optimizes one or more operating parameters of APs 142 in a wireless network 106 on a per channel basis in accordance with one or more techniques of the disclosure.

In this example, FIG. 1B illustrates NMS 130 configured to operate according to an artificial intelligence / machine-learning-based computing platform providing comprehensive automation, insight, and assurance (Wi-Fi Assurance, Wired Assurance and WAN assurance) spanning from wireless network 106 and wired LAN 175 networks at the network edge (far left of FIG. 1B) to cloud-based application services 181 hosted by computing resources within data centers 179 (far right of FIG. 1B). NMS 130 includes a virtual network assistant 132, radio resource management module 134, network data 136, and channel-specific operating parameters 138. Channel-specific operating parameters 138 include one or more optimized operating parameters determined for each specific channel of a given frequency band determined and/or applied in accordance with one or more techniques of the disclosure.

As described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. For example, network management system 130 may be configured to proactively monitor and adaptively configure network system 100 so as to provide self-driving capabilities. Moreover, VNA 133 includes a natural language processing engine to provide AI-driven support and troubleshooting, anomaly detection, AI-driven location services, and AI-drive RF optimization with reinforcement learning.

In some examples, NMS 130 may obtain data from third-party sources for use in determining channel assignments. NMS 130 may obtain data that include application performance data (e.g., data regarding the performance of a video conferencing application) from third party-sources, such as the provider of a video conferencing application. In an example, NMS 130 generates a request for information and provides the request to servers associated with a third-party. The third-party generates data that includes metrics regarding the performance of a client application and provides the data to NMS 130 for consumption by NMS 130. RRM 134 obtains the data and uses the included metrics in determining channel assignments for an AP.

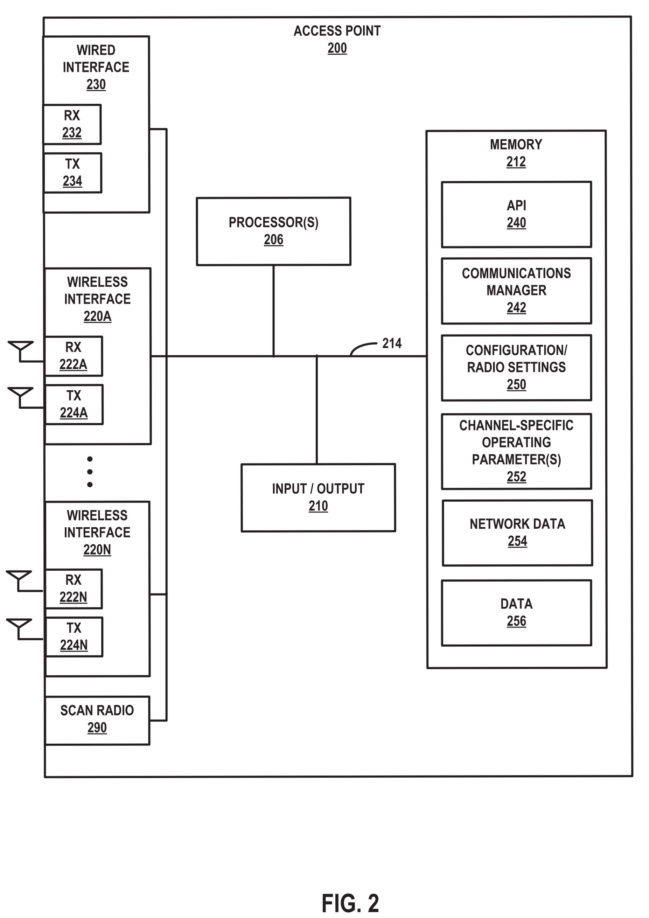

FIG. 2 is a block diagram of an example access point (AP) 200 configured in accordance with one or more techniques of the disclosure. Example access point 200 shown in FIG. 2 may be used to implement any of AP 142 as shown and described herein with respect to FIG. 1A. Access point 200 may comprise, for example, a Wi-Fi, Bluetooth and/or Bluetooth Low Energy (BLE) base station or any other type of wireless access point.

In the example of FIG. 2, access point 200 includes a wired interface 230, wireless interfaces 220A-220B (alternatively referred to as "data radios"), scan radio 290 (alternatively referred to as a "continuous scan radio"), one or more processor(s) 206, memory 212, and a user interface 210, coupled together via a bus 214 over which the various elements may exchange data and information. Wired interface 230 represents a physical network interface and includes a receiver 232 and a transmitter 234 for sending and receiving network communications, e.g., packets. Wired interface 230 couples, either directly or indirectly, access point 200 to network(s) 104 of FIG. 1A. Wireless interfaces 220A-220N represent wireless network interfaces and include receivers 222A-222N, respectively, each including a receive antenna via which access point 200 may receive wireless signals from wireless communications devices, such as UEs 148 of FIG. 1A, other instances of AP device 200, and/or any other wireless device. Wireless interfaces 220A-220N further include transmitters 224A-224N, respectively, each including transmit antennas via which access point 200 may transmit wireless signals to wireless communications devices, such as UEs 148 of FIG. 1A, other instances of AP 200, and/or any other wireless device. In some examples, wireless interfaces 220A-220N may include one or more Wi-Fi 802.11 interfaces (e.g., 2.4 GHz and/or 5 GHz) one or more Bluetooth interface and/or a Bluetooth Low Energy (BLE) interfaces. One or more of the interfaces 220A-220N may be used to perform RTT measurements. However, these are given for example purposes only, and the disclosure is not limited in this respect.

AP 200 may use a data radio wireless interfaces 220 to observe a channel used by wireless interfaces 220 for communicating data. AP 200 may use data radios of wireless interfaces 220 to observe one or more types of interference within wireless environment of AP 200, such as non-WIFI interference, undecodable WIFI interference, unknown WIFI interference, a noise floor of the wireless environment, and/or other types of interference, and generate data based on the recorded interference. For example, AP 200 may use a data radio of wireless interface 220A to observe wireless channels assigned to AP 200 and generate data regarding the performance of the channel. AP 200 may may use the data radios of wireless interfaces 220 to generate comparatively higher detailed data than scan radios of AP 200 (e.g., as data radios of AP 200 may be tuned to a particular channel of a frequency longer than a scan radio of AP 200).

Scan radio 290 may be a component of AP 200 that listens or scans a wireless environment of AP 200. AP 200 may use scan radio 290 to observe a plurality of channels in a wireless environment of AP 200 for use in generating data that includes metrics regarding the wireless environment of AP 200. AP 200 may generate data based on the quality or performance of channels scanned by scan radio 290 beyond the channels assigned to wireless interfaces. For instance, AP 200 may use scan radio to record interference observed on each channel in a wireless environment of AP 200. AP 200 may use the data radios of wireless interfaces 220 to generate comparatively more detailed data regarding an assigned or current channel and use scan radio 290 to generate comparatively less detailed data for a number of channels of a frequency band (e.g., scan radio 290 may observe numerous channels over the same period of time a data radio obtains data regarding a more limited number of channels). For instance, AP 200 may use the data radio to record interference observed on operating channel. While illustrated as a separate component, in some examples AP 200 may use one or more of wireless interfaces 220 as scan radio 290.

Processor(s) 206 are programmable hardware-based processors configured to execute software instructions, such as those used to define a software or computer program, stored to and/or provided by a computer-readable storage medium (such as memory 212), such as non-transitory computer-readable mediums including a storage device (e.g., a disk drive, or an optical drive) or a memory (such as Flash memory or RAM), or a transmission medium (such as bus 214 and/or any of interfaces 220, 230) or any other type of volatile or non-volatile memory, that stores and/or conveys instructions to cause the one or more processors 206 to perform one or more of the techniques described herein.

Memory 212 includes one or more devices configured to store programming modules and/or data associated with operation of access point 200. For example, memory 212 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 206 to perform one or more of the techniques described herein.

In this example, memory 212 stores executable software and/or data including an application programming interface (API) 240, a communications manager 242, configuration/radio settings 250, channel operating parameters 252, network data 254, and data storage 256. In some examples, network data 254 includes any type of data measured or collected by AP 200 including, for example, received signal strength indicators (RSSIs) of wireless signals received from one or more other APs in the wireless network, RSSIs of wireless signals received from one or more wireless clients (UEs). For instance, AP 200 may store data that includes metrics regarding the quality (e.g., performance) of one or more channels in network data 254. Data 256 may further store any data used and/or generated by access point 200, including data collected from UEs 148 and/or one or more other APs 200.

AP 200 may provide data regarding the quality of channels to an NMS, such as NMS 130 as illustrated in FIGS. 1A-1B. In an example, AP 200 records information regarding interference in channels of a frequency band using a data radio and a scan radio. AP 200 generates data that includes metrics regarding the quality of the channels and provides the data to NMS 130.

Communications manager 242 includes program code that, when executed by processor(s) 206, allow access point 200 to communicate with UEs 148, other APs 142, and/or network(s) 104 via any of interface(s) 230 and/or 220A-220B. Configuration settings 250 include any device settings for access point 200 such as default or adjusted radio settings for each of wireless interface(s) 220A-220B. In accordance with one or more techniques of the disclosure, channel-specific operating parameters 252 include one or more optimized operating parameters (e.g., transmit power optimizations) determined for each specific channel of a given frequency band in accordance with one or more techniques of the disclosure. In the event AP 200 is configured to communicate over multiple frequency bands, such as the 2.4 GHz, 5 GHz, and/or 6 GHz frequency bands, channel-specific operating parameters 252 may include channel-specific operating parameters for each of the frequency bands over which AP 200 is configured to communicate.

These channel-specific optimized operating parameters may be determined by, for example, NMS 130 executing radio resource management module 134 as described with respect to FIGS. 1A and 1B. In some examples, the optimized operating parameters stored in channel operating parameters are updated on a continuous, periodic, or scheduled basis.

AP 200 may receive channel assignments from NMS 130. NMS 130 may determine one or more channel assignments for AP 200 based on data received from AP 200 and/or other information and provide an indication of the channel assignments to AP 200. AP 200 may reconfigure one or more components (e.g. wireless interfaces 220) to operate in accordance with the channel assignments.

Input / output (I/O) 210 represents physical hardware components that enable interaction with a user, such as buttons, a touchscreen, a display and the like. Although not shown, memory 212 typically stores executable software for controlling a user interface with respect to input received via I/O 210.

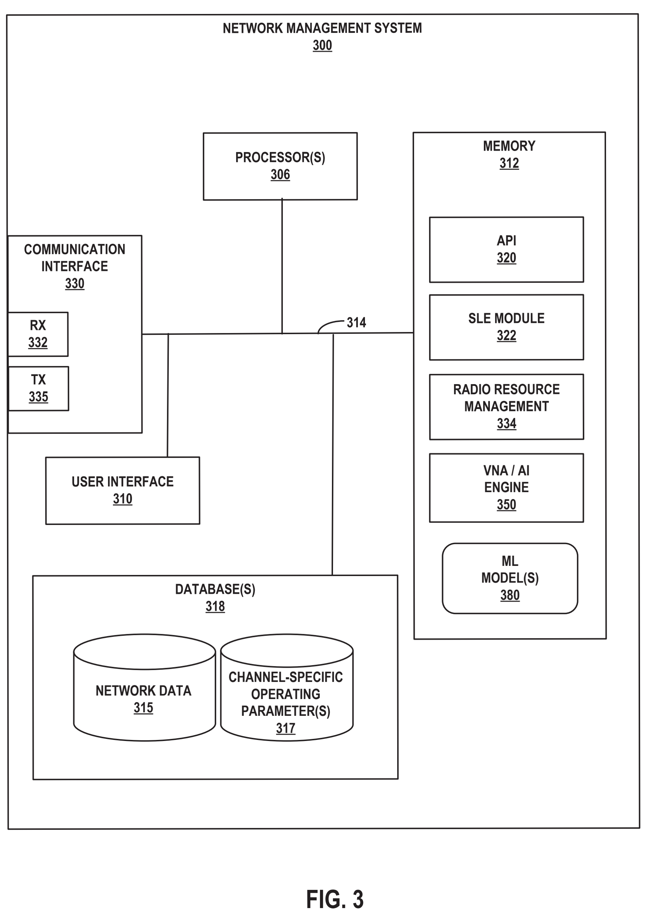

FIG. 3 is a block diagram of an example network management system (NMS) 300 configured to optimize one or more operating parameters for a plurality of APs in a wireless network on a per channel basis in accordance with one or more techniques of the disclosure. For example, NMS 300 is configured to optimize one or more operating parameters for a plurality of APs based on the specific channel assignments for each of the APs. NMS 300 may be used to implement, for example, NMS 130 in FIGS. 1A-1B. In such examples, NMS 300 is responsible for monitoring and management of one or more wireless networks 106A-106N at sites 102A-102N, respectively. In some examples, NMS 300 receives network data 315 collected by APs 142/200 and analyzes this data for cloud-based management of wireless networks 106A-106N. In some examples, NMS 300 may be part of another server shown in FIG. 1A, 1B or a part of any other server.

NMS 300 includes a communications interface 330, one or more processor(s) 306, a user interface 310, a memory 320, and a database 318. The various elements are coupled together via a bus 314 over which the various elements may exchange data and information.

Databases 318 include storage for data in connection with monitoring and management of wireless networks 106. Network data 315 includes any type of data measured or collected by APs 142/200 including, for example, received signal strength indicators (RSSIs) of wireless signals communicated between APs 142, RSSIs of wireless signals communicated between APs 142 and UEs 148, etc. Data 256 may further store any data used and/or generated by access point 200, including data collected from UEs 148 and/or one or more other APs 200. In accordance with one or more techniques of the disclosure, channel-specific operating parameters 317 include one or more optimized operating parameters (e.g., transmit power optimizations) determined for each specific channel of a given frequency band. In some examples, channel-specific operating parameters 317 includes channel-specific operating parameters for each of one or more frequency bands, such as the 2.4 GHz, 5 GHz, or 6 GHz frequency bands, and/or any other wireless frequency band.

Processor(s) 306 execute software instructions, such as those used to define a software or computer program, stored to and/or provided by a computer-readable storage medium (such as memory 320), such as non-transitory computer-readable mediums including a storage device (e.g., a disk drive, or an optical drive) or a memory (such as Flash memory or RAM) or a transmission medium (such as bus 314 and/or interface 330) or any other type of volatile or non-volatile memory, that stores instructions to cause the one or more processors 306 to perform the techniques described herein.

Communications interface 330 may include, for example, an Ethernet interface. Communications interface 330 couples NMS 300 to a network and/or the Internet, such as any of network(s) 104 as shown in FIG. 1A, and/or any local area networks. Communications interface 330 includes a receiver 332 and a transmitter 335 by which NMS 300 receives/transmits data and information to/from any of AP 142, servers 110, 116, 122, 128 and/or any other devices or systems forming part of network system 100 such as shown in FIGS. 1A-1B. The data and information received by NMS 300 may include, for example, network data and/or event log data received from APs 142 used by NMS 300 to remotely monitor and/or control the performance of wireless networks 106A-106N and to determine the locations of APs 142. NMS may further transmit data via communications interface 330 to any of network devices such as APs 142 at any of network sites 102A-102N to remotely manage wireless networks 106A-106N.

Memory 320 includes one or more devices configured to store programming modules and/or data associated with operation of NMS 300. For example, memory 320 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 306 to perform the techniques described herein.

In this example, memory 312 includes an API 320, an SLE module 322, a radio resource management module (RRM) 334, a virtual network assistant (VNA)/AI engine 350, a location engine 370, and one or more machine learning models 380. NMS 300 may also include any other programmed modules, software engines and/or interfaces configured for remote monitoring and management of wireless networks 106A-106N, including remote monitoring and management of any of AP 142.

RRM 334 monitors one or more metrics for each site 102A-102N in order to learn and optimize the power and/or radio-frequency (RF) environment at each site. For example, RRM 334 may monitor the coverage and capacity SLE metrics (e.g., managed by SLE module 322) for a wireless network 106 at a site 102 in order to identify potential issues with coverage and/or capacity in the wireless network 106 and to adjust radio settings of APs 142 at each site to address the identified issues. RRM 334 may determine channel and transmit power distribution across all AP 142 in each network 106A-106N. RRM 334 may monitor events, power, channel, bandwidth, and number of clients connected to each AP device. RRM 334 may measure the strength of a radio signal of client devices, such as an RSSI value. RRM 334 may further automatically change or update configurations of one or more AP 142 at a site 102 with an aim to improve the coverage and/or capacity SLE metrics and thus to provide an improved wireless experience for the user.

In some examples, RRM 334 may obtain metrics such as those included in Table I below:

Table I

| Timestamp | Access Point | Scan Channel | Non-WIFI | Noise Floor | Undecodable WIFI | Unknown WIFI |
|---|---|---|---|---|---|---|
| 11/31/24 9:00 AM | 003F160A14 | 32 | 0.005 | -80 | 0.001 | 0.003 |
| 11/31/24 10:00 AM | 003F160A14 | 46 | 0.1 | -90 | 0.006 | 0.1 |
| 11/31/24 11:00 AM | 003F160A14 | 50 | 0.12 | -75 | 0.02 | 0.13 |
| ... | ... | ... | ... | ... | ... | ... |
| 11/31/24 3:00 PM | 003F160A14 | 32 | 0.03 | -93 | 0.02 | 0.08 |

RRM 334 may organize the metrics based on the time the metric was observed by an associated AP (e.g., "Timestamp" of Table I), an identifier of the AP (e.g., "003F160A14" of Table I) and the scan channel associated with the metric when applicable (e.g., when the metric is observed by the scan radio of the AP). In the example of Table I, RRM 334 organizes the non-WIFI, noise floor, undecodable WIFI, and unknown WIFI metrics for AP 003F160A14 according to the scan channel and the time at which the metrics were observed.

In accordance with one or more techniques of the disclosure, RRM 334 further includes program instructions that, when executed by one or more processors of NMS 300 and/or any other computing device, determine channel assignments for APs based on channel scores. For example, RRM 334 may compute normalized metrics based on obtained sets of metrics observed for a channel and compute a channel score representative of a quality of the channel based on the normalized metrics. RRM 334 then assigns a channel to an AP based on the channel score. In some examples, the RRM 334 may further generate a notification indicative of the channel assignment for display on a user computing device associated with, for example, an IT technician.

VNA/AI engine 350 analyzes network data received from AP 142 as well as its own data to monitor performance of wireless networks 106A-106N. For example, VNA engine 350 may identify when anomalous or abnormal states are encountered in one of wireless networks 106A-106N. VNA/AI engine 350 may use a root cause analysis module (not shown) to identify the root cause of any anomalous or abnormal states. In some examples, the root cause analysis module utilizes artificial intelligence-based techniques to help identify the root cause of any poor SLE metric(s) at one or more of wireless networks 106A-106N. In addition, VNA/AI engine 350 may automatically invoke one or more remedial actions intended to address the identified root cause(s) of one or more poor SLE metrics. Examples of remedial actions that may be automatically invoked by VNA/AI engine 350 may include, but are not limited to, invoking RRM 334 to reboot one or more AP devices and/or adjust/modify the transmit power of a specific radio in a specific AP device, adding service set identifier (SSID) configuration to a specific AP device, changing channels on an AP device or a set of AP devices, etc. The remedial actions may further include restarting a switch and/or a router, invoke downloading of new software to an AP device, switch, or router, etc. These remedial actions are given for example purposes only, and the disclosure is not limited in this respect. If automatic remedial actions are not available or do not adequately resolve the root cause, VNA/AI engine 350 may proactively and automatically provide a notification including recommended remedial actions to be taken by IT personnel to address the anomalous or abnormal wireless network operation.

SLE (service level experience) module 322 enables set up and tracking of thresholds for one or more SLE (e.g., performance) metrics for each of wireless networks 106A-106N. SLE module 322 further analyzes network data (e.g., stored as network data 315) collected by AP devices and/or UEs associated with wireless networks 106A-106N, such as any of AP 142 from UEs 148 in each wireless network 106A-106N. For example, AP 142A-1 through 142A-N collect network data from UEs 148A-1 through 148A-N currently associated with wireless network 106A (e.g., named assets, connected/unconnected Wi-Fi clients). This data, in addition to any network data collected by one or more APs 142A-1 through 142A-N in wireless network 106A, is transmitted to NMS 300 and stored as, for example, network data 315.

NMS 300 executes SLE module 322 to determine one or more SLE metrics for each UE 148 associated with a wireless network 106. One or more of the SLE metrics may further be aggregated to each AP device at a site to gain insight into contribution of each AP device to wireless network performance at the site. The SLE metrics track whether the service level for each particular SLE metric meets the configured threshold value(s). In some examples, each SLE metric may further include one or more classifiers. If a metric does not meet the configured SLE threshold value for the site, the failure may be attributed to one of the classifiers to further understand how and/or why the failure occurred.

In some examples, RRM 334 uses SLE metrics in determining channel assignments. RRM 334 may obtain SLE metrics from SLE module 322 and include the SLE metrics in computing channel scores. For instance, RRM 334 may compute normalized metrics of the SLE metrics and generate channel scores based on a product of the normalized SLE metrics and other normalized metrics (e.g., undecodable WIFI).

In some examples, RRM 334 uses additional metrics in computing the channel scores. RRM 334 may use metrics that include continuous scan radio readings (e.g., readings from scan radio 290 as illustrated in FIG. 2), data radio readings (e.g., readings from the data radio of AP 200 as illustrated in FIG. 2), external Basic Service Set Identifiers (BSSIDs) (e.g., access points or network devices that are not managed by NMS 300), radar systems, 3rd party application data (e.g., from application servers), automated frequency coordination (AFC) for 6 GHz WIFI systems, and data from ESL systems within a site (e.g., WIFI data, BLUETOOTH Low Energy data, etc., from the shelf labels or other components of an ESL system), and/or Fast Fourier Transform (FFT) dynamic scan(s) or RF spectrum captures performed by one or more components (which may or may not be included in APs 142).

In one example, RRM 334 normalizes metrics included in the data obtained from two or more sources and uses the metrics to compute the channel score as described above. In another example, RRM 334 computes a first channel score based on the interference data obtained from the continuous scan radios (as described above) and a second channel score based metrics included in data obtained from a second source. In this example, RRM 334 may correlate or combine the first and second channel scores to provide a final channel score based on the first and second sources. In some scenarios, the second source may be data radio readings of interference data observed for an operating channel of an AP. The operating channel interference data may be more accurate than the interference data observed for the same channel by the continuous scan radio on the same AP. RRM 334 may combine interference data from the data radio and the continuous scan radio for the same channel to get verified and/or refined interference data for the channel.

In some examples, NMS 300 may obtain historical data for use by RRM 334 to generate forecasted channel scores and store the historical data. NMS 300 may obtain historical data that includes one or more types of metrics associated with performance of channels over a period of time (e.g., minutes, hours, days, etc.) and store the historical data in database 318 for use in generating forecasted channel scores. In an example, NMS 300 obtains historical data that includes metrics regarding unknown WIFI interference and non-WIFI interference experienced on a particular channel over a predetermined period of time among other metrics. NMS 300 provides the historical data to RRM 334 for processing to determine a forecasted channel score for the particular channel based on the metrics included in the historical data.

VNA/AI engine 350 may perform root-cause analysis to determine a root cause of degraded performance of a channel. VNA/AI engine 350 may use the unified channel score(s) computed by RRM 334. VNA/AI engine 350 may perform root cause analysis to determine a root cause of degraded quality of a given channel as measured by the unified channels score of the given channel (e.g., due to interference observed by APs 142), such as improper placement of one more APs, a device within a site generating interference, suboptimal channel assignments, other metrics, etc. In an example, VNA/AI engine 350 obtains metrics regarding channel interference processed by RRM 334. VNA/AI engine 350 determines that the root cause of the channel interference is a device within site 102A that is generating non-WIFI interference.

VNA/AI engine 350 may generate customer insights regarding the placement and configuration of APs 142 within sites 102. VNA/AI engine 350 may use information, such as that used to perform root-cause analysis, to generate insights that include recommendations on changing placement locations of APs 142, remediating sources of interference (e.g., sources of interference such as other devices, lights, machinery, etc.), changing the configuration of APs 142 (e.g., adjusting broadcast power, changing channel assignments, etc.), an identification that a given site has a relatively high noise floor (e.g., a factory floor where interference may be unavoidable), and/or other insights. VNA/AI engine 350 may generate an instance of user interface 310 as including a visual indication of one or more of the insights and cause NMS 300 to output the instance of user interface 310.

RRM 334 may generate forecasted channel scores indicative of predicted future performance of one or more channels. RRM 334 may generate the forecasted channel scores based on one or more factors, such as in response to a user-driven event (e.g., a request from an administrator to generate forecasted channel scores, a request to proactively determine a future channel assignment, etc.), in response to an upcoming scheduled event (e.g., an upcoming configuration change), due to an anomaly event (e.g., an unexpected change in channel assignment, a rapid deterioration in one or more metrics, etc.), and/or based on other factors. For example, RRM 334 may use the forecasted channel scores to determine channel assignments for an immediate next hour in response to local events (e.g., events associated with individual network devices) and to determine channel assignments for the next time period in response to global scheduled events (e.g., site-wide events, system 100-level events, etc.). RRM 334 may use the forecasted channel scores to proactively determine which channels are likely to perform relatively well in supporting users and which channels are unlikely to perform relatively well in supporting users at future points in time. RRM 334 may use the forecasted channel scores in lieu of and/or in addition to other channel scores. For example, RRM 334 may use the forecasted channel scores as an additional input when determining channel assignments.

RRM 334 may use one or more of ML models 380 to generate forecasted channel scores. RRM 334 may provide historical data as input to ML models 380 and receive a forecasted channel score as output. In an example, RRM 334 determines that forecasted channel scores should be computed for an AP in response to a scheduled configuration change. RRM 334 applies a model of ML models 380 to the historical data to cause the ML model to output forecasted channel scores. The ML model outputs the forecasted channel scores and RRM 334 uses the forecasted channel scores to determine channel assignments for the AP.

In some examples, RRM 334 may use information regarding anomalies when generating forecasted channel scores. RRM 334 may obtain information regarding anomalies that resulted in channel re-assignments and provide the information regarding the anomalies as input to an ML model of ML models 380 and receive a forecasted channel score from the ML model as output. RRM 334 may provide the information regarding anomalies when using ML models 380 to determine forecasted channel scores to punish channels with anomalies (e.g., reduce or otherwise negatively weight forecasted channel scores associated with channels that experience above-average number of anomalies). In an example, RRM 334 obtains information regarding anomalies associated with a particular channel, where the anomalies result in periodic channel re-assignment away from the channel. RRM 334 provides the anomalies as input to a model of ML models 380 in addition to historical data associated with the particular channel. The ML model generates a channel score that is punished based on the anomalies associated with the particular channel. RRM 334 determines a channel assignment using the channel score punished based on the anomalies.

In some examples, RRM 334 may aggregate scores by channel to generate sitewide (alternatively referred to as "site-level") channel scores. RRM 334 may generate the sitewide channel scores as representative of the quality (e.g., levels of interference) for channels across an entire site as opposed to the wireless environments of individual APs. RRM 334 may aggregate the channel scores for a given channel into a sitewide channel score to obtain a site view of which channels are optimal/problematic across all APs. For instance, RRM 334 may determine a site-level channel score for at least one channel based on an average of channel scores for the least one channel across APs at the site.

In some examples, RRM 334 may aggregate scores by channel and AP to generate personal channel scores for one or more of the APs. RRM 334 may aggregate channel scores for one or more of channels of an AP to generate a person channel scores representative of which channels are optimal/problematic for each AP within a site. RRM 334 may use the personal channel scores to assign channels to individuals APs with the site.

In some examples, RRM 334 may analyze APs that report high channel scores (e.g., scores above a threshold or scores that are comparatively higher than those of other APs). RRM 334 may analyze the APs and determine whether any of the APs are transmitting on a channel with an associated channel score that is above a threshold. In an example, RRM 334 computes a relatively high channel score for an AP. RRM 334 determines that the AP is assigned the channel with the relatively high channel score and re-configures the AP to transmit using a different channel with a comparatively lower channel score.

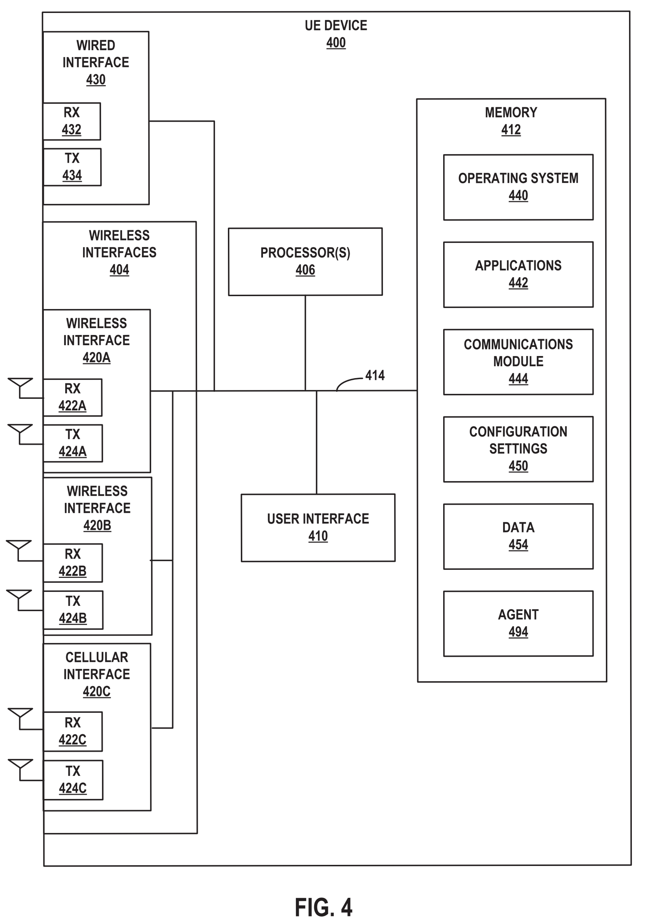

FIG. 4 shows an example user equipment (UE) device 400. Example UE device 400 shown in FIG. 4 may be used to implement any of UEs 148 as shown and described herein with respect to FIG. 1. UE device 400 may include any type of wireless client device, and the disclosure is not limited in this respect. For example, UE device 400 may include a mobile device such as a smart phone, tablet or laptop computer, a personal digital assistant (PDA), a wireless terminal, a smart watch, a smart ring or any other type of mobile or wearable device. UE 400 may also include any type of IoT client device such as a printer, a security sensor or device, an environmental sensor, or any other connected device configured to communicate over one or more wireless networks.

UE device 400 includes a wired interface 430, wireless interfaces 420A-420C, one or more processor(s) 406, memory 412, and a user interface 410. The various elements are coupled together via a bus 414 over which the various elements may exchange data and information. Wired interface 430 includes a receiver 432 and a transmitter 434. Wired interface 430 may be used, if desired, to couple UE 400 to network(s) 104 of FIG. 1. First, second and third wireless interfaces 420A, 420B, and 420C include receivers 422A, 422B, and 422C, respectively, each including a receive antenna via which UE 400 may receive wireless signals from wireless communications devices, such as AP 142 of FIG. 1, AP 200 of FIG. 2, other UEs 148, or other devices configured for wireless communication. First, second, and third wireless interfaces 420A, 420B, and 420C further include transmitters 424A, 424B, and 424C, respectively, each including transmit antennas via which UE 400 may transmit wireless signals to wireless communications devices, such as AP 142 of FIG. 1, AP 200 of FIG. 2, other UEs 148 and/or other devices configured for wireless communication. In some examples, first wireless interface 420A may include a Wi-Fi 802.11 interface (e.g., 2.4 GHz and/or 5 GHz) and second wireless interface 420B may include a Bluetooth interface and/or a Bluetooth Low Energy interface. Third wireless interface 420C may include, for example, a cellular interface through which UE device 400 may connect to a cellular network.

Processor(s) 406 execute software instructions, such as those used to define a software or computer program, stored to and/or provided by a computer-readable storage medium (such as memory 412), such as non-transitory computer-readable mediums including a storage device (e.g., a disk drive, or an optical drive) or a memory (such as Flash memory or RAM) or a transmission medium (such as bus 414 and/or any of interfaces 420, 430) or any other type of volatile or non-volatile memory, that stores instructions to cause the one or more processors 406 to perform the techniques described herein.

Memory 412 includes one or more devices configured to store programming modules and/or data associated with operation of UE 400. For example, memory 412 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 406 to perform the techniques described herein.

In this example, memory 412 includes an operating system 440, applications 442, a communications module 444, configuration settings 450, data storage for network data 454, and agent 494. Data storage for network data 454 may include, for example, a status/error log including network data specific to UE 400. As described above, network data 454 may include any network data, events, and/or states that may be related to determination of one or more roaming quality assessments. The network data may include event data such as a log of normal events and error events according to a logging level based on instructions from the network management system (e.g., NMS 130/300). Data storage for network data 454 may store any data used and/or generated by UE 400, such as network data used to determine proximity to a proximity zone, that is collected by UE 400 and transmitted to any of AP 142 in a wireless network 106 for further transmission to NMS 130.

Communications module 444 includes program code that, when executed by processor(s) 406, enables UE 400 to communicate using any of wired interface(s) 430, wireless interfaces 420A-420B and/or cellular interface 450C. Configuration settings 450 include any device settings for UE 400 settings for each of wireless interface(s) 420A-420B and/or cellular interface 420C.

Processors 406 may execute agent 494, which may be a software component of UE device 400 that captures data regarding one or more aspects of the performance of UE device 400. Agent 494 may capture information regarding the performance of one or more of applications (e.g., a video conference application of applications 442) and/or information regarding one or more SLEs associated with UE 400. For example, agent 494 may capture information regarding dropped packets during a video conferencing call and include the information in data 454.

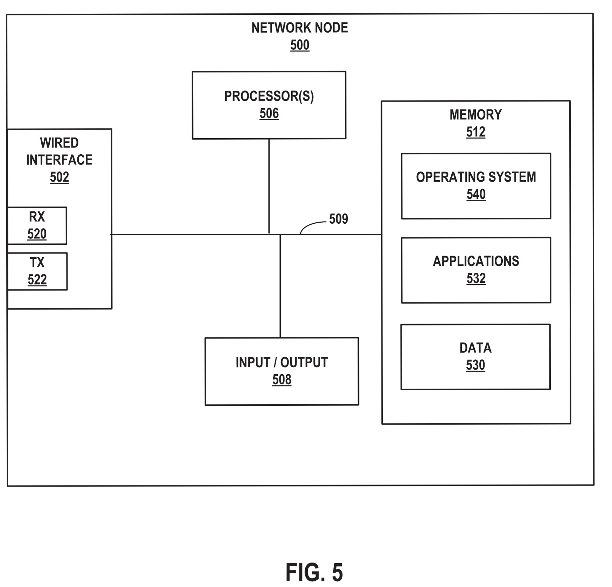

FIG. 5 is a block diagram illustrating an example network node 500 configured according to the techniques described herein. In one or more examples, the network node 500 implements a device or a server attached to the network 104 of FIGS. 1A/1B, e.g., router, switch, AAA server 110, DHCP server 116, DNS server 122, VNA 132, AP location module 135, Web server 128A-128X, etc., or a network device such as, e.g., routers, switches or the like.

In this example, network node 500 includes a communications interface 502, e.g., an Ethernet interface, a processor 506, input / output 508, e.g., display, buttons, keyboard, keypad, touch screen, mouse, etc., a memory 512 and an assembly of components 516, e.g., assembly of hardware module, e.g., assembly of circuits, coupled together via a bus 509 over which the various elements may interchange data and information. Communications interface 502 couples the network node 500 to a network, such as an enterprise network.

Though only one interface is shown by way of example, those skilled in the art should recognize that network nodes may have multiple communication interfaces. Communications interface 502 includes a receiver 520 via which the network node 500 can receive data and information (e.g., including data indicative of distances between APs, and /or operation related information such as registration request, AAA services, DHCP requests, Simple Notification Service (SNS) look-ups, and Web page requests). Communications interface 502 includes a transmitter 522, via which the network node 500 can send data and information (e.g., including location information, configuration information, authentication information, web page data, etc.).

Memory 512 stores executable software applications 532, operating system 540 and data/information 530. Data 530 includes system log and/or error log that stores network data and/or proximity information for node 500 and/or other devices, such as wireless access points, based on a logging level according to instructions from the network management system. Network node 500 may, in some examples, forward the network data to a network management system (e.g., NMS 130 of FIG. 1) for analysis as described herein.

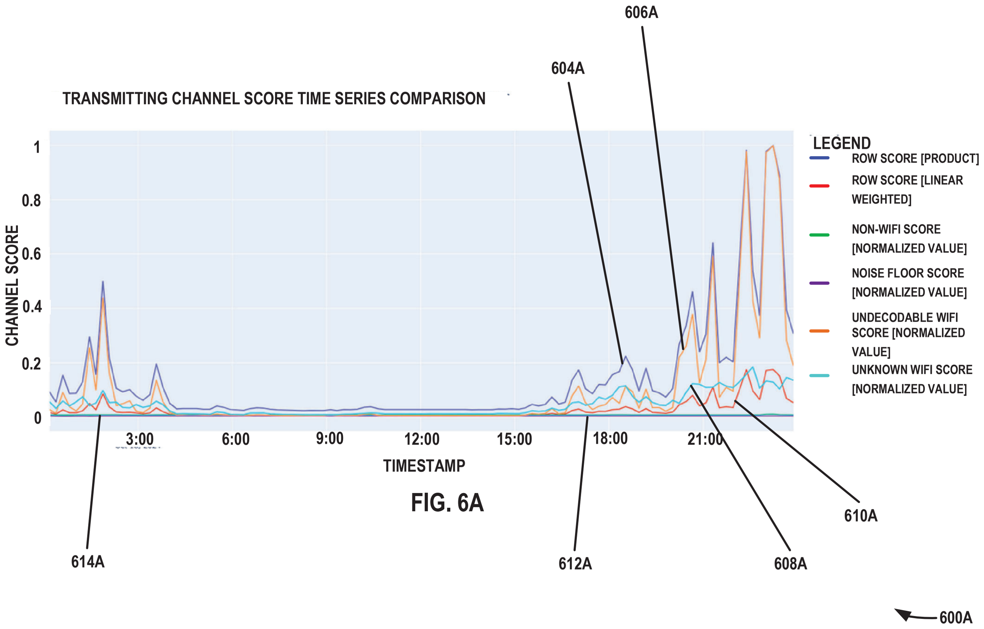

FIGS. 6A-6B are graphs 600A, 600B of example metrics of a wireless channel, in accordance with one or more techniques of this disclosure. FIGS. 6A-6B is described in the context of FIG. 1A.

In the example of FIG. 6A, NMS 130 obtains data from an AP, such as AP 142A-1, that includes one or more metrics for a single channel. NMS 130 may obtain metrics regarding non-WIFI interference, a noise floor, undecodable WIFI interference, unknown WIFI interference, and/or other metrics. NMS 130 may obtain data that includes the metrics from an AP at multiple times (e.g., those represented by the timestamps illustrated in FIG. 6A).

NMS 130 may process the obtained metrics to compute normalized metrics for the channel. NMS 130 may compute normalized metrics that include "NON-WIFI SCORE" (e.g., non-WIFI 614A, interference from sources other than WIFI devices, such as weather radars), "NOISE FLOOR SCORE" (e.g., noise floor score 612A, minimum amount of noise recorded on a wireless channel in a period of time in dBm), "UNDECODABLE WIFI SCORE" (e.g., undecodable WIFI score 606A, WIFI interference from hidden networks), and "UNKNOWN WIFI SCORE" (e.g., unknown WIFI score 608A, interference caused by an unknown device). As part of processing the scores, RRM 134 may normalize the values observed on a given channel at a given time. RRM 134 may normalize the values for each and for each of the metrics to a value between 0 and 1 as representing the quality of the channel. RRM 134 may normalize the metrics to result in a score for each of the metrics for a row. If the normalized value is close to 0, RRM 134 determines that the value observed is normal and optimal for performance. If the normalized value is close to 1, RRM 134 determines that the value observed is anomalous and bad for performance.

RRM 134 may compute product scores (e.g., product score 604, "ROWA SCORE [PRODUCT]") and/or linear weighted scores (e.g., linear weighted score 610A, "ROW SCORE [LINEAR WEIGHTED]") as unified channel scores representative of the quality of the channel. RRM 134 may compute product score 604A to ensure that the unified channel score for channel reflects the quality of the channel and that individual types of interference are not lost in the unified channel score. In the example of FIG. 6A, RRM 134 computes product score 604A as comparatively higher after 21:00 than linear weighted score 610A (e.g., 0.6 vs 0.1 near 21:00) to take into account the relatively high undecodable WIFI score 606A at 21:00.

NMS 130 may generate graph 600A as visually displaying product score 604A, linear weighted score 610A, and the metrics 606A, 608A, 612A, 614A. NMS 130 may generate graph 600A to visually indicate the scores and the metrics associated with a channel and output graph 600A to an administrator. For example, NMS 130 may generate graph 600A to provide a visual indication of the performance of a channel to an administrator.

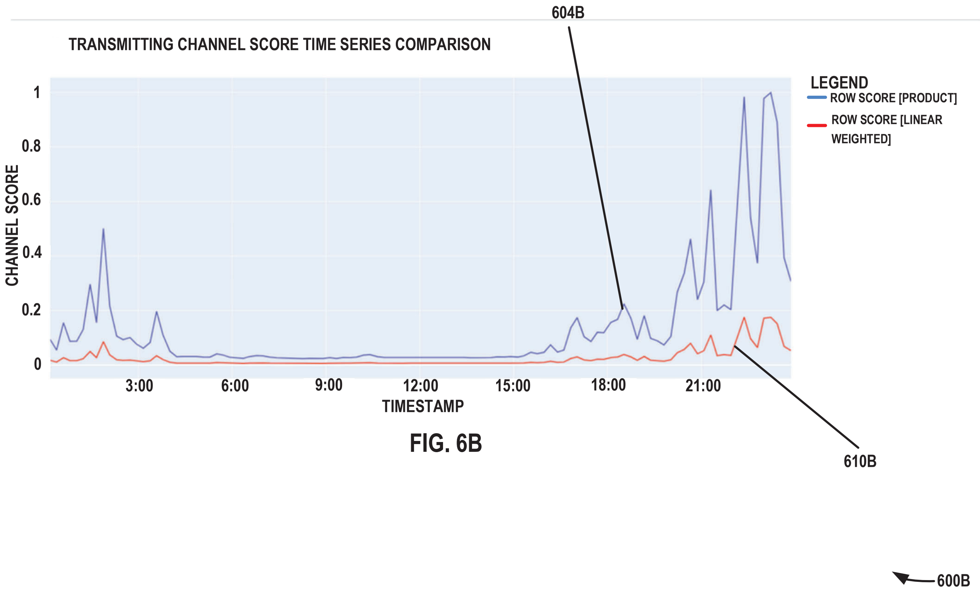

In the example of FIG. 6B, RRM 134 generates graph 600B identical to graph 600A of FIG. 6A with the metrics for the channel other than the unified channel scores removed. As shown in FIG. 6B, RRM 134 generates product score 604B and linear weighted score 610B with significantly different values (e.g., between 0 and 3:00, and from 15:00 onwards). RRM 134 may use product scores instead of linear weighted scores to avoid assigning channels with relatively low scores for some types of interference outweighing relatively high scores for other types of interference (e.g., where one type of interference may render a channel unusable but where other types of interference have relatively low scores and cause the linear weighted score to also be relatively low). While illustrated as including the linear weighted score for comparison purposes (e.g., to show the difference between product and linear weighted unified channel scores), RRM 134 may refrain from computing linear weighted scores and may use the product scores in determining channel assignments.

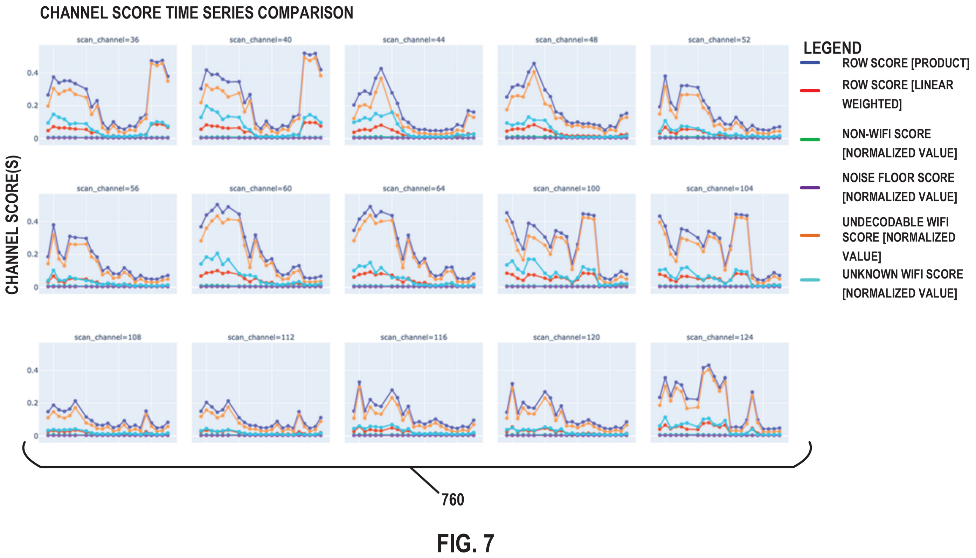

FIG. 7 is a set of graphs 760 of example metrics of wireless channels, in accordance with one or more techniques of this disclosure. FIG. 7 is described in the context of FIG. 1A.

RRM 134 may generate one or more graphs similar to that illustrated in FIGS. 6A-6B. For example, RRM 134 may generate the graphs of FIG. 7 as including graphs similar to those illustrated in FIGS. 6A-6B for multiple channels for a site. As illustrated in FIG. 7, RRM 134 may generate a graph of graphs 760 for each channel of a frequency band including normalized values for interference and unified channel scores. RRM 134 may generate the graphs of FIG. 7 to provide an administrator a view of the performance of one or more channels over time.

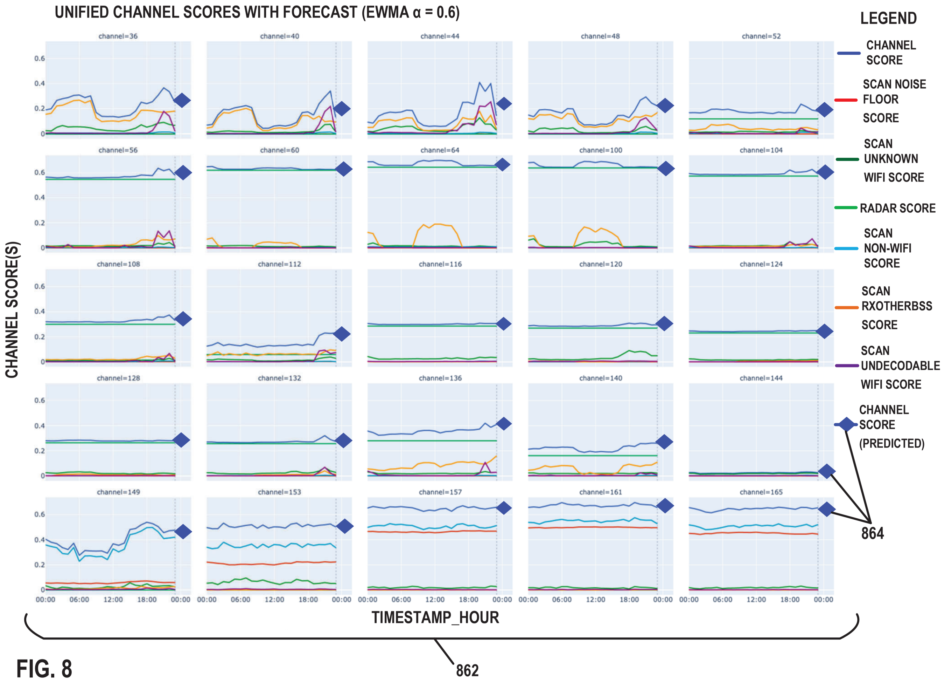

FIG. 8 is a set of graphs 862 of example metrics that include forecasted metrics of wireless channels within a wireless frequency band, in accordance with one or more techniques of this disclosure. FIG. 8 is described in the context of FIG. 1A.

RRM 134 may generate graphs 862 as including an indication of a forecasted channel score (e.g., "CHANNEL SCORE (PREDICTED)" as illustrated in FIG. 8). RRM 134 may generate each of graphs 862 as visually displaying metrics, such as the forecasted channel score, for an associated channel. RRM 134 may determine a forecasted channel and generate graphs 862 as including forecasted channel score indicators 864 (e.g., the diamond-shaped indicators visually displayed within each graph of graphs 862). In the example, of FIG. 8, RRM 134 generates graphs 862 as including forecasted channel score indicators 864 in addition to indicators of other scores that include channel scores, scan noise floor scores, unknown WIFI scores, radar scores, scans by receivers of other base stations scores ("SCAN RXOTHERBSSS SCORE"), and undecodable WIFI scores. In other examples, RRM 134 may generate graphs 862 as visually including the forecasted channel score with more, less, of different indicators of other scores and/or metrics.

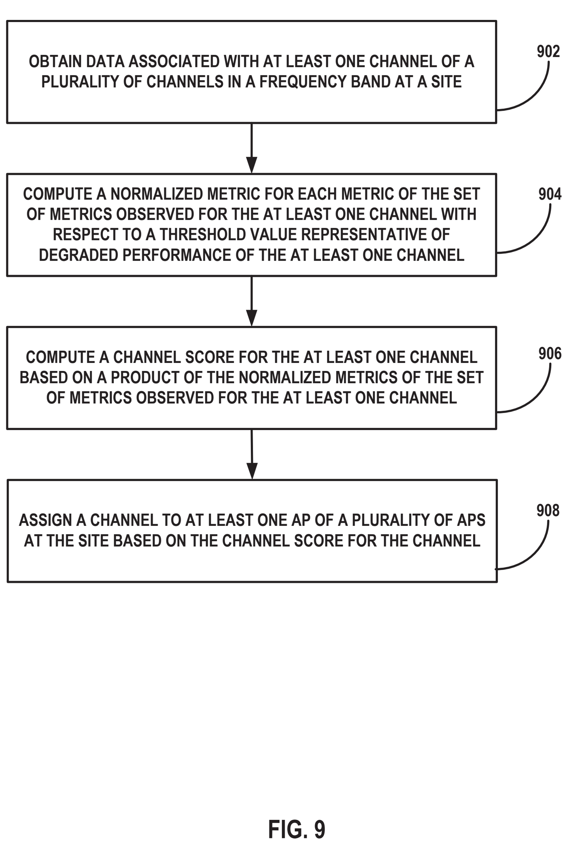

FIG. 9 is a flowchart of an example operation of determining channel assignments, in accordance with one or more techniques of the disclosure. FIG. 9 is described in the context of FIG. 1A.

A network management system, such as NMS 130, obtains data associated with at least one channel of a plurality of channels in a frequency band at a site, such as site 102A (902). NMS 130 may obtain data that includes a set of metrics, such as a non-WIFI metric, an undecodable WIFI metric, an unknown WIFI metric, a noise floor metric, and/or other metrics. NMS 130 may obtain data based on interference observed by a continuous scan radio and/or a data radio of an AP.

NMS 130 computes a normalized metric for each metric of the set of metrics observed for the at least on channel with respect to a threshold value representative of degraded performance of the at least one channel (904). NMS 130 may compute a normalized metric that represents a quality of the at least one channel with respect to the corresponding metric. For example, NMS 130 may normalize each metric to a value between 1 and 0, with 1 representing relatively poor or anomalous performance and 0 representing relatively good performance.

NMS 130 computes a channel score for the at least one channel based on a product of the normalized metrics of the set of metrics observed for the at least one channel (906). NMS 130 may compute the channel score as representing the quality of the at least one channel with respect to the set of metrics. For example, NMS 130 may compute a unified channel score with a value between 1 and 0, with 1 representing relatively poor or anomalous performance of the channel and 0 representing relatively good performance of the channel.

NMS 130 assigns a channel to at least one AP, such as AP 142A-1, of a plurality of APs, such as APs 142, at site 102 based on the channel score for the channel. NMS 130 may use the channel score for the channel to determine whether to refrain from assigning the channel to an AP, re-assign AP from the channel to a different channel, and/or whether to keep an AP assigned to the channel. For example, NMS 130 may determine that a given AP should be reassigned from a first channel to a second channel based on the first channel having a relatively high channel score.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively, or additionally, if implemented in software or firmware, the techniques may be realized at least in part by a computer-readable data storage medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium such as random-access memory (RAM), read-only memory (ROM), non-volatile random-access memory (NVRAM), electrically erasable programmable read-only memory (EEPROM), Flash memory, magnetic or optical data storage media, and the like. In some examples, an article of manufacture may comprise one or more computer-readable storage media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Therefore from one perspective, there have been described techniques for a network management system (NMS) that computes a channel score based on a normalized metric for a channel and assigns a channel to an access point (AP) based on the channel score). In one example, the NMS obtains data associated with at least one channel of a plurality of channels in a frequency band at a site, where the data includes a set of metrics. The NMS computes a normalized metric for each metrics of the set of metrics with respect to a threshold value representative of degraded performance of the at least one channel. The NMS computes a channel score based on a product of the normalized metrics. The NMS assigns a channel to at least one AP based on the channel score for the channel.

Further examples of feature combinations taught by the present disclosure are set out in the following numbered clauses.

Clause 1. A network management system (NMS) comprising: a memory; and processing circuitry in communication with the memory and configured to: obtain data associated with at least one channel of a plurality of channels in a frequency band at a site, wherein the data includes a set of metrics; compute a normalized metric for each metric of the set of metrics observed for the at least one channel with respect to a threshold value representative of degraded performance of the at least one channel, wherein the normalized metric represents a quality of the at least one channel with respect to the corresponding metric; compute a channel score for the at least one channel based on a product of the normalized metrics of the set of metrics observed for the at least one channel, wherein the channel score represents the quality of the at least one channel with respect to the set of metrics; and assign a channel to at least one AP of a plurality of APs at the site based on the channel score for the channel.

Clause 2. The NMS of clause 1, wherein to assign the channel, the processing circuitry is further configured to assign the channel to the at least one AP for a subsequent time window based on one or more channel scores for the channel over a previous time window.

Clause 3. The NMS of clause 1 or 2, wherein the data comprises interference data observed for the at least one channel at each AP of the plurality of APs at the site, and wherein to obtain the interference data, the processing circuitry is configured to obtain the interference data for the at least one channel from continuous scan radios of one or more APs of the plurality of APs.

Clause 4. The NMS of clause 1, 2 or 3, wherein, to obtain the data, the processing circuitry is configured to obtain the data from two or more of: continuous scan radio readings, data radio readings, access points or network access devices that are not managed by the NMS, radar systems, third party application data, automated frequency coordination (AFC) systems, electronic shelf label (ESL) systems, and/or Fast Fourier Transform (FFT) dynamic scan or radio frequency (RF) spectrum capture.

Clause 5. The NMS of any preceding clause, wherein each of the normalized metrics and the channel score comprise a value between 0 and 1, with 0 representing a normal quality of the channel and 1 representing poor quality of the channel.

Clause 6. The NMS of any preceding clause, wherein, to obtain the data, the processing circuitry is configured to obtain the data from continuous scan radios of one or more APs of the plurality of APs at the site, and wherein the set of metrics includes: a non-WIFI metric, a noise floor metric, an undecodable WIFI metric, and an unknown WIFI metric.

Clause 7. The NMS of any preceding clause, wherein the processing circuitry is configured to determine a site-level channel score for the at least one channel based on an average of channel scores for the least one channel across the plurality of APs at the site.

Clause 8. The NMS of any preceding clause, wherein the processing circuitry is further configured to perform root cause analysis to determine a root cause of the degraded performance of the at least one channel.

Clause 9. The NMS of any preceding clause, wherein the data comprises service level experience (SLE) data associated with client devices connected to one or more APs of the plurality of APs, and wherein to obtain the SLE data the processing circuitry is configured to compute the SLE data based on network data obtained from at least one of the one or more APs of the plurality of APs.

Clause 10. The NMS of any preceding clause, wherein the data associated with the at least one channel comprises historical data, wherein the processing circuitry is further configured to generate, using at least one machine learning model, a forecasted channel score for the at least one channel indicative of a predicted future performance of the at least one channel, and wherein to assign the channel, the processing circuitry is further configured to assign the channel to the at least one AP of the plurality of APs based on the forecasted channel score.

Clause 11. A method, comprising: obtaining, by a network management system (NMS), data associated with at least one channel of a plurality of channels in a frequency band at a site, wherein the data includes a set of metrics; computing, by the NMS, a normalized metric for each metric of the set of metrics observed for the at least one channel with respect to a threshold value representative of degraded performance of the at least one channel, wherein the normalized metric represents a quality of the at least one channel with respect to the corresponding metric; computing, by the NMS, a channel score for the at least one channel based on a product of the normalized metrics of the set of metrics observed for the at least one channel, wherein the channel score represents the quality of the at least one channel with respect to the set of metrics; and assigning, by the NMS, a channel to at least one AP of a plurality of APs at the site based on the channel score for the channel.

Clause 12. The method of clause 11, wherein assigning the channel further comprises assigning the channel to the at least one AP for a subsequent time window based on one or more channel scores for the channel over a previous time window.

Clause 13. The method of clause 11 or 12, wherein the data comprises interference data observed for the at least one channel at each AP of the plurality of APs at the site, and wherein obtaining the interference data comprises obtaining the interference data for the at least one channel from continuous scan radios of one or more APs of the plurality of APs.

Clause 14. The method of clause 11, 12 or 13, wherein obtaining the data further comprises obtaining the data from two or more of: continuous scan radio readings, data radio readings, access points or network access devices that are not managed by the NMS, radar systems, third party application data, automated frequency coordination (AFC) systems, electronic shelf label (ESL) systems, and/or Fast Fourier Transform (FFT) dynamic scan or radio frequency (RF) spectrum capture.

Clause 15. The method of any of clauses 11 to 14, wherein each of the normalized metrics and the channel score comprise a value between 0 and 1, with 0 representing a normal quality of the channel and 1 representing poor quality of the channel.

Clause 16. The method of any of clauses 11 to 15, wherein obtaining the data further comprises obtaining the data from continuous scan radios of the one or more APs of the plurality of APs at the site, and wherein the set of metrics includes: a non-WIFI metric, a noise floor metric, an undecodable WIFI metric, and an unknown WIFI metric.

Clause 17. The method of any of clauses 11 to 16, further comprising: determining, by the NMS, a site-level channel score for the at least one channel based on an average of channel scores for the least one channel across the plurality of APs at the site.

Clause 18. The method of any of clauses 11 to 17, further comprising performing, by the NMS, root cause analysis to determine a root cause of the degraded performance of the at least one channel.

Clause 19. The method of any of clauses 11 to 18, wherein the data comprises service level experience (SLE) data associated with client devices connected to one or more APs of the plurality of APs, and wherein obtain the SLE data comprising computing the SLE data based on network data obtained from at least one of the one or more APs of the plurality of APs.

Clause 20. Computer-readable media, configured with instructions that, when executed, cause processing circuitry to: obtain data associated with at least one channel of a plurality of channels in a frequency band at a site, wherein the data includes a set of metrics; compute a normalized metric for each metric of the set of metrics observed for the at least one channel with respect to a threshold value representative of degraded performance of the at least one channel, wherein the normalized metric represents a quality of the at least one channel with respect to the corresponding metric; compute a channel score for the at least one channel based on a product of the normalized metrics of the set of metrics observed for the at least one channel, wherein the channel score represents the quality of the at least one channel with respect to the set of metrics; and assign a channel to at least one AP of a plurality of APs at the site based on the channel score for the channel.

Clause 21. The computer-readable media of clause 19, wherein to assign the channel, the instructions further cause the processing circuitry to assign the channel to the at least one AP for a subsequent time window based on one or more channel scores for the channel over a previous time window.

**Claims**

1. A network management system, NMS, comprising:

   a memory; and
   processing circuitry in communication with the memory and configured to:

      obtain data associated with at least one channel of a plurality of channels in a frequency band at a site, wherein the data includes a set of metrics;
      compute a normalized metric for each metric of the set of metrics observed for the at least one channel with respect to a threshold value representative of degraded performance of the at least one channel, wherein the normalized metric represents a quality of the at least one channel with respect to the corresponding metric;
      compute a channel score for the at least one channel based on a product of the normalized metrics of the set of metrics observed for the at least one channel, wherein the channel score represents the quality of the at least one channel with respect to the set of metrics; and
      assign a channel to at least one access point, AP, of a plurality of APs at the site based on the channel score for the channel.

2. The NMS of claim 1, wherein to assign the channel, the processing circuitry is further configured to assign the channel to the at least one AP for a subsequent time window based on one or more channel scores for the channel over a previous time window.

3. The NMS of any of claims 1-2, wherein the data comprises interference data observed for the at least one channel at each AP of the plurality of APs at the site, and wherein to obtain the interference data, the processing circuitry is configured to obtain the interference data for the at least one channel from continuous scan radios of one or more APs of the plurality of APs.

4. The NMS of any of claims 1-3, wherein, to obtain the data, the processing circuitry is configured to obtain the data from two or more of:

      continuous scan radio readings,
      data radio readings,
      access points or network access devices that are not managed by the NMS,
      radar systems,
      third party application data,
      automated frequency coordination, AFC, systems,
      electronic shelf label, ESL, systems, and/or
      Fast Fourier Transform, FFT, dynamic scan or radio frequency, RF, spectrum capture.

5. The NMS of any of claims 1-4, wherein each of the normalized metrics and the channel score comprise a value between 0 and 1, with 0 representing a normal quality of the channel and 1 representing poor quality of the channel.

6. The NMS of any of claims 1-5, wherein, to obtain the data, the processing circuitry is configured to obtain the data from continuous scan radios of one or more APs of the plurality of APs at the site, and wherein the set of metrics includes:

      a non-WIFI metric,
      a noise floor metric,

an undecodable WIFI metric, and
an unknown WIFI metric.

7. The NMS of any of claims 1-6, wherein the processing circuitry is configured to determine a site-level channel score for the at least one channel based on an average of channel scores for the least one channel across the plurality of APs at the site.

8. The NMS of any of claims 1-7, wherein the processing circuitry is further configured to perform root cause analysis to determine a root cause of the degraded performance of the at least one channel.

9. The NMS of any of claims 1-8, wherein the data comprises service level experience, SLE, data associated with client devices connected to one or more APs of the plurality of APs, and wherein to obtain the SLE data the processing circuitry is configured to compute the SLE data based on network data obtained from at least one of the one or more APs of the plurality of APs.

10. The NMS of any of claims 1-9,

wherein the data associated with the at least one channel comprises historical data,
wherein the processing circuitry is further configured to generate, using at least one machine learning model, a forecasted channel score for the at least one channel indicative of a predicted future performance of the at least one channel, and
wherein to assign the channel, the processing circuitry is further configured to assign the channel to the at least one AP of the plurality of APs based on the forecasted channel score.

11. A method, comprising:

obtaining, by a network management system, NMS, data associated with at least one channel of a plurality of channels in a frequency band at a site, wherein the data includes a set of metrics;
computing, by the NMS, a normalized metric for each metric of the set of metrics observed for the at least one channel with respect to a threshold value representative of degraded performance of the at least one channel, wherein the normalized metric represents a quality of the at least one channel with respect to the corresponding metric;
computing, by the NMS, a channel score for the at least one channel based on a product of the normalized metrics of the set of metrics observed for the at least one channel, wherein the channel score represents the quality of the at least one channel with respect to the set of metrics; and
assigning, by the NMS, a channel to at least one access point, AP, of a plurality of APs at the site based on the channel score for the channel.

12. The method of claim 11, wherein assigning the channel further comprises assigning the channel to the at least one AP for a subsequent time window based on one or more channel scores for the channel over a previous time window.

13. The method of any of claims 11-12, wherein the data comprises interference data observed for the at least one channel at each AP of the plurality of APs at the site, and wherein obtaining the interference data comprises obtaining the interference data for the at least one channel from continuous scan radios of one or more APs of the plurality of APs.

14. The method of any of claims 11-13, further comprising steps corresponding to the functionality recited in any of claims 4-10.

15. Computer-readable media comprising instructions that, when executed by one or more programmable processors, cause the one or more programmable processors to perform the method recited by any of claims 11-14.

FIG. 1A

# NETWORK MANAGEMENT SYSTEM

| VNA / AI MODULE 132 | RADIO RESOURCE MANAGEMENT 134 |
| --- | --- |

NETWORK DATA 136

CHANNEL-SPECIFIC OPERATING PARAMETER(S) 138

130

100

148

USER DEVICES

WIRELESS ~106

WIRED ~175

SD-WAN 177

DATA CENTER 179

181

187A

189

187B

MULTICLOUD APPS

Connected Security

FIG. 1B

ACCESS POINT
200

WIRED
INTERFACE
230

RX
232

TX
234

WIRELESS
INTERFACE
220A

RX
222A

TX
224A

WIRELESS
INTERFACE
220N

RX
222N

TX
224N

SCAN RADIO
290

PROCESSOR(S)
206

214

INPUT / OUTPUT
210

MEMORY
212

API
240

COMMUNICATIONS
MANAGER
242

CONFIGURATION/
RADIO SETTINGS
250

CHANNEL-SPECIFIC
OPERATING
PARAMETER(S)
252

NETWORK DATA
254

DATA
256

FIG. 2

NETWORK MANAGEMENT SYSTEM
300

PROCESSOR(S)
306

MEMORY
312

API
320

SLE MODULE
322

RADIO RESOURCE
MANAGEMENT
334

VNA / AI
ENGINE
350

ML
MODEL(S)
380

COMMUNICATION
INTERFACE
330

RX
332

TX
335

314

USER INTERFACE
310

DATABASE(S)
318

NETWORK DATA
315

CHANNEL-SPECIFIC
OPERATING
PARAMETER(S)
317

FIG. 3

FIG. 4

NETWORK NODE
500

PROCESSOR(S)
506

WIRED
INTERFACE
502

RX
520

TX
522

509

MEMORY
512

OPERATING SYSTEM
540

APPLICATIONS
532

DATA
530

INPUT / OUTPUT
508

FIG. 5

TRANSMITTING CHANNEL SCORE TIME SERIES COMPARISON

FIG. 6A

TRANSMITTING CHANNEL SCORE TIME SERIES COMPARISON

604B

LEGEND
— ROW SCORE [PRODUCT]
— ROW SCORE [LINEAR WEIGHTED]

610B

FIG. 6B

600B

28

EP 4 788 033 A1

CHANNEL SCORE TIME SERIES COMPARISON

LEGEND
ROW SCORE [PRODUCT]
ROW SCORE [LINEAR WEIGHTED]
NON-WIFI SCORE [NORMALIZED VALUE]
NOISE FLOOR SCORE [NORMALIZED VALUE]
UNDECODABLE WIFI SCORE [NORMALIZED VALUE]
UNKNOWN WIFI SCORE [NORMALIZED VALUE]

CHANNEL SCORE(S)

760

FIG. 7

UNIFIED CHANNEL SCORES WITH FORECAST (EWMA α = 0.6)

FIG. 8

OBTAIN DATA ASSOCIATED WITH AT LEAST ONE CHANNEL OF A PLURALITY OF CHANNELS IN A FREQUENCY BAND AT A SITE — 902

COMPUTE A NORMALIZED METRIC FOR EACH METRIC OF THE SET OF METRICS OBSERVED FOR THE AT LEAST ONE CHANNEL WITH RESPECT TO A THRESHOLD VALUE REPRESENTATIVE OF DEGRADED PERFORMANCE OF THE AT LEAST ONE CHANNEL — 904

COMPUTE A CHANNEL SCORE FOR THE AT LEAST ONE CHANNEL BASED ON A PRODUCT OF THE NORMALIZED METRICS OF THE SET OF METRICS OBSERVED FOR THE AT LEAST ONE CHANNEL — 906

ASSIGN A CHANNEL TO AT LEAST ONE AP OF A PLURALITY OF APS AT THE SITE BASED ON THE CHANNEL SCORE FOR THE CHANNEL — 908

**FIG. 9**

Europäisches
Patentamt

European
Patent Office

Office européen
des brevets

# EUROPEAN SEARCH REPORT

**Application Number**

EP 26 15 2227

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/035128 A1 (CHAN DOUGLAS [US] ET AL) 7 February 2013 (2013-02-07) | 1,3-6, 11,13-15 | INV. H04W72/541 |
| A | * paragraphs [0027] - [0035]; figures 4,6 * | 2,7-10, 12 | H04W24/02 H04W72/542 |
| | ----- | | H04W84/12 |
| X | US 2023/354397 A1 (HATHI PREYAS SATISH [IN] ET AL) 2 November 2023 (2023-11-02) | 1,3-6, 11,13-15 | |
| A | * paragraphs [0017] - [0028]; claims 1-20; figures 3,4A,4B * | 2,7-10, 12 | |
| | ----- | | |
| X | CN 114 302 466 A (SHENZHEN FRIHUA COMMUNICATION TECH LIMITED COMPANY) 8 April 2022 (2022-04-08) | 1,3-6, 11,13-15 | |
| A | * paragraphs [0060] - [0088]; claims 1-10 * | 2,7-10, 12 | |
| | ----- | | |

**TECHNICAL FIELDS SEARCHED (IPC)**

H04W

The present search report has been drawn up for all claims

| Place of search | Date of completion of the search | Examiner |
|---|---|---|
| The Hague | 27 May 2026 | Boureanu, Vlad |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
...................................................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 26 15 2227

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2026

| Patent document cited in search report | Publication date | Patent family member(s) | Publication date |
|---|---|---|---|
| US 2013035128 A1 | 07-02-2013 | NONE | |
| US 2023354397 A1 | 02-11-2023 | NONE | |
| CN 114302466 A | 08-04-2022 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 40219925
- US 63752398